# EUROPEAN PATENT APPLICATION

(11) **EP 2 136 176 A2**
(43) Date of publication of application: **23.12.2009**
(21) Application number: 09162624.2
(22) Date of filing: 12.06.2009
(51) Int. Cl.: F41B 7/04

(54) **Elastic band-operated underwater gun**

(30) Priority: 17.06.2008 IT MI20081095
(71) Applicant: Dapiran, Giorgio, 16100 Genova (IT)
(72) Inventor: Dapiran, Giorgio, 16100 Genova (IT)
(74) Representative: De Gregori, Antonella

(57) **Abstract**

Underwater gun comprising a stock (2) made up of an elongated body, a handgrip (3) arranged substantially at one end of such a stock, an arrow or spear (4) positioned on the stock itself. Such a spear is held in position through a release mechanism that comprises snap holding means (5) of the arrow, deactivated by a trigger (6) associated with the handgrip. The gun also comprises one or more elastic annular bands (7) the ends of which are fastened to a bow that after pulling by hand on each elastic band hooks onto one or more pins or grooves fixed or formed on the arrow.

## Description

The present invention refers to an elastic band-operated gun, commonly known by the name "speargun".

In particular, the present invention refers to an elastic band-operated gun of the kind commonly used for underwater fishing.

This type of gun normally comprises a stock made up of an elongated body, a handgrip usually arranged at one end of such a stock, but in some models it is arranged in a central position of the stock, and an arrow positioned on the stock, for example on a longitudinal guide formed on it. Elastic band-operated guns actuate the arrow through one or more elastic bands that when placed under tension substantially connect the rear end of the arrow with the toe of the stock of the gun.

The arrow or spear is held in its seat or in general in position on the stock of the gun through a release mechanism that usually comprises snap holding means of the arrow, deactivated by a trigger arranged inside the handgrip.

The elastic band, in some gun models, is formed from a pair of tubular elements, made from elastomeric material, joined together at one end by means of an ogive or bow, rigid or flexible according to the technology with which it is made, which is associated with the arrow, for example in grooves formed on its back. The opposite ends of such elastomeric tubes are fastened near to the toe of the stock in suitable seats at its side for example through ring nuts arranged on the end of the elastic band.

In this type of gun, the precision of firing depends greatly upon the symmetry with which the seats for the elastic bands are positioned and upon how perfectly identical the behaviour of the two elastomeric tubes is, which must be the same length and above all have the same degree of elasticity. Indeed, the technique for making these elastic bands does not allow the length of the pair to be strictly equal, which in many cases do not even have the same diameter, due to the production process itself of the elastomer that leads to large tolerances in the outer diameters of the tube.

In other models of gun, for example of the type made by the same Applicant, the problem caused by asymmetry of the structure is avoided by using one or more elastic annular bands the ends of which are fastened to a bow that after pulling by hand on each elastic band hooks onto one or more pins fixed on the arrow.

Each elastic band is inserted in the stock of the gun through a housing made by a transversal through hole (perpendicular to the vertical plane of the gun). The tension of the elastic band is discharged onto the support surface of the elastic band in this duly shaped hole when the elastic band is stretched and the bow hooks onto the spear.

A perfectly rectilinear trajectory of the tip of the spear during firing depends upon many factors, the first of which is the possibility of managing the recoil without the stock undergoing (sideways or vertical) deviations during the spear-firing phase. A slight movement of the end of the stock opposite the handgrip (also called head), while the spear runs on the guide formed in the stock, or in any other support, can cause a deviation thereof with respect to the sight alignment. So as not to have sideways movements of the head of the gun in such a model with an "elastic annular band", the reaction caused on the stock by the pressure of the elastic portion on the right hand side of the gun must mirror that on the left hand side.

Otherwise the prevalent sideways component of this reaction will move the head right or left causing a deviation of the spear during firing and substantial lack of precision in firing.

Therefore, a possible imperfection or asymmetry of the support surface of the elastic band can cause this drawback.

Moreover, such unbalancing can be caused by a different tension in the two portions (left - right) of the elastic annular band due to manual loading since the elastic annular band cannot slide on its support due to the high friction between the rubber of which it is made and the wood of the stock.

The present invention proposes to avoid the aforementioned drawbacks by making a mechanism for fastening the elastic annular band in which an idle pulley is inserted into the quoted transversal hole, arranged substantially with its vertical axis passing through the middle of the stock and the elastic annular band is housed in the throat of such a pulley. The pins of such a pulley are fastened to the stock of the gun itself.

An aspect of the present invention concerns an underwater gun having the characteristics of the attached claim 1.

Further purposes and advantages of the present invention shall become clear from the following description and from the attached drawings of an embodiment, provided purely as a non-limiting example, in which:

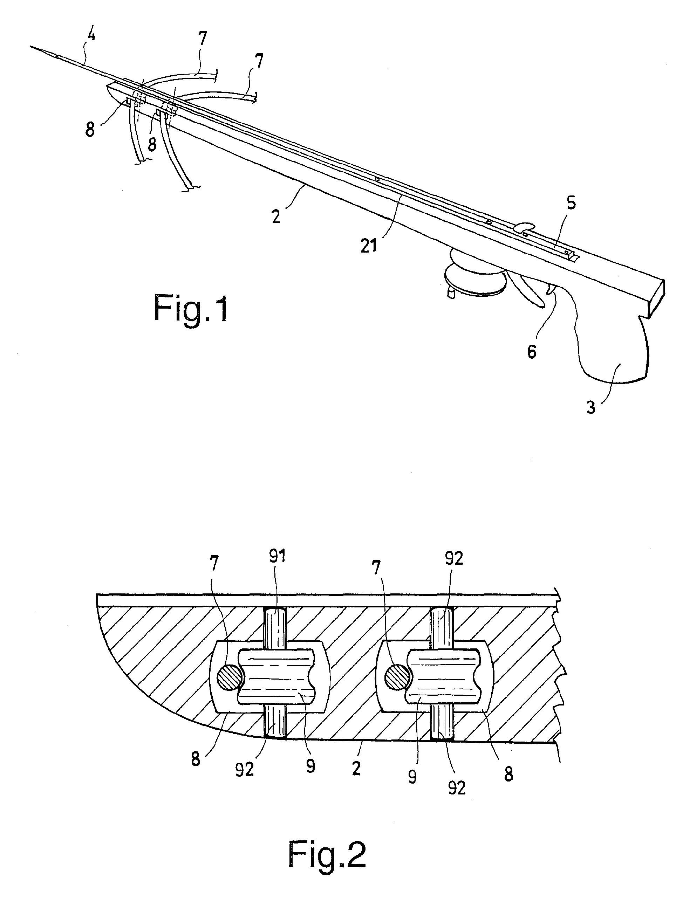

- figure 1 is a schematic perspective view of an underwater gun according to the present invention;
- figure 2 is a longitudinal section view of the head of the underwater gun according to the present invention.

With reference to the quoted figures, the underwater gun according to the present invention comprises a stock 2 made up of an elongated body, a handgrip 3 for example arranged at the end of such a stock, and an arrow 4 positioned on the stock itself, for example housed on a longitudinal guide 21 formed on it.

The arrow or spear is held in its seat or in general in position on the stock of the gun through a release mechanism that comprises snap holding means 5 of the arrow, deactivated by a trigger 6 arranged inside the handgrip.

According to the present invention the gun also comprises one or more elastic annular bands 7 the ends of which are fastened to a bow that after pulling by hand on each elastic band hooks onto one or more pins or grooves fixed or formed on the arrow.

In a first embodiment, the gun has a single elastic band, in a second embodiment it foresees the presence of two elastic bands and in a third embodiment three elastic bands are foreseen. Such elastic bands are preferably foreseen aligned with each other with respect to the longitudinal axis of the stock of the gun.

Each elastic band is associated with the stock of the gun for example through a through hole 8 that is transversal with respect to the axis of the stock, inside which an idle pulley 9 is inserted, free to rotate and arranged substantially with its vertical axis passing through the middle of the stock. Such an elastic annular band is housed in the throat of such a pulley.

The pulley is fastened to the stock of the gun through a pair of pins, a lower pin 91 and an upper pin 92 respectively.

Clearly, in the embodiment that has two elastic bands there are two holes made and two pulleys inserted in such holes; similarly, in the embodiment that foresees three elastic bands there will be three pulleys and holes.

Such a pulley can run along the axis of the pin to position itself, for example in the case in which there is more than one elastic band, in relation to the other pulleys so as not to create overlapping of the elastic bands themselves. This is because the housing for the pulley is foreseen to be wider than its thickness. The positioning of the elastic bands with respect to the stock is an important detail since it determines the hydro-dynamic resistance in the sideways movements of the gun (so-called training).

## Claims

1. Underwater gun comprising
- a stock (2) made up of an elongated body,
- a handgrip (3) arranged substantially at one end of such a stock,
- an arrow or spear (4) positioned on the stock itself,
- such a spear being held in position through a release mechanism that comprises snap holding means (5) of the arrow, deactivated by a trigger (6) associated with the handgrip,
- one or more elastic annular bands (7) the ends of which are fastened to a bow that after pulling by hand on each elastic band hooks onto one or more pins or grooves fixed or formed on the arrow,
**characterised in that**
such elastic bands are associated with the stock of the gun in the throat of an idle pulley (9) free to rotate and arranged substantially with the vertical axis passing through the middle of the stock itself.

2. Gun according to claim 1, wherein such an idle pulley is inserted in the stock in a through hole (8) that is substantially transversal with respect to the axis of the stock.

3. Gun according to claim 1, wherein the pulley (9) is fastened to the stock of the gun through a pair of pins, a lower pin (91) and an upper pin (92) respectively.

4. Gun according to claim 1, wherein such an arrow (4) is housed on a longitudinal guide (21) formed on the stock.

5. Gun according to claim 1, wherein such a pulley can run along the axis of such pins.
